# EUROPEAN PATENT APPLICATION

(11) **EP 4 794 296 A1**
(43) Date of publication of application: **19.08.2026**
(21) Application number: 24876269.2
(22) Date of filing: 20.08.2024
(51) Int. Cl.: H04L 47/70

(54) **PACKET SENDING METHOD, ELECTRONIC DEVICE, AND READABLE STORAGE MEDIUM**

(30) Priority: 09.10.2023 CN 202311305088
(71) Applicant: ZTE CORPORATION, Shenzhen, Guangdong 518057 (CN)
(72) Inventor: PENG, Shaofu, Shenzhen, Guangdong 518057 (CN); CHEN, Xiao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/113327
(87) International publication number: WO 2025/077449

(57) **Abstract**

The present application relates to the field of data communication, and discloses a packet sending method, an electronic device, and a readable storage medium. The method comprises: upon a target node receiving a service packet, on the basis of a reception moment of the service packet, a first time offset of the target node receiving the service packet, and an intra-node forwarding latency of the target node, determining a target moment at which the service packet reaches an egress port of the target node; acquiring a time slot performing sending in a sending state corresponding to the egress port at the target moment, and, on the basis of a time offset amount between the time slot performing sending and a target outgoing time slot, determining a sorting value of the service packet in a sending queue to be sent of the egress port; and, according to the magnitude of the sorting value, saving the service packet into the sending queue to be sent for sending.

## Description

### CROSS-REFERENCE TO RELATED APPLICATIONS

This application claims priority to Chinese Patent Application No. 202311305088.3 filed on October 9, 2023 to the CNIPA, and entitled "PACKET SENDING METHOD, ELECTRONIC DEVICE, AND READABLE STORAGE MEDIUM", the entirety of which is incorporated herein by reference.

### TECHNICAL FIELD

Embodiments of the present application relate to the technical field of packet switching in the field of data communications, in particular to a packet sending method, an electronic device, and a readable storage medium.

### BACKGROUND

Draft-peng-detnet-packet-timeslot-mechanism-03, published by the Internet Engineering Task Force (IETF), describes a timeslot-based queuing and forwarding mechanism (TQF for short) that makes timeslots into resources and opens and reserves timeslots for services. The draft describes a scheme for timeslot resource allocation and notification. At an ingress node in a network, a corresponding outgoing timeslot resource is reserved on an outgoing port for a service flow with a corresponding arrival time. At an intermediate node in the network, a corresponding outgoing timeslot resource is reserved on the outgoing port for a service flow with a corresponding incoming timeslot.

The scheme mainly uses a round-robin queue to support timeslot-based packet scheduling. Usually, one timeslot corresponds to one queue to provide a guaranteed delay and delay jitter for a service flow. However, the scheme only supports sending a packet within a specified timeslot, the packet cannot be sent in advance and thus always experiences a constant upper bound of delay, and it is difficult to meet service needs of a service flow that requires a lower lower bound of delay.

### SUMMARY

Embodiments of the present application provide a packet sending method, an electronic device, and a readable storage medium.

In a first aspect, embodiments of the present application provide a packet sending method, including: determining, upon a target node receives a service packet, a target time at which the service packet arrives at an outgoing port of the target node on the basis of a reception time of the service packet, a first time deviation for receiving the service packet of the target node, and an intra-node forwarding delay of the target node; obtaining an ongoing sending timeslot in a sending state corresponding to the outgoing port at the target time, and determining a rank of the service packet in a to-be-sent queue of the outgoing port on the basis of a time offset between the ongoing sending timeslot and an ideal outgoing timeslot; wherein the ideal outgoing timeslot is an outgoing timeslot reserved for the service packet within an orchestration period of the outgoing port of the target node; and storing the service packet into the to-be-sent queue for transmission according to the rank.

In a second aspect, embodiments of the present application provide an electronic device, including a processor and a memory. The memory stores a program or instructions runnable on the processor. The program or instructions, when executed by the processor, implement the steps of the method as described in the above first aspect.

In a third aspect, embodiments of the present application provides a readable storage medium. The readable storage medium stores a program or instructions thereon. The program or instructions, when executed by a processor, implement the steps of the method as described in the above first aspect.

### BRIEF DESCRIPTION OF DRAWING(S)

Accompanying drawings here are incorporated into the specification, constitute a part of the specification, show embodiments consistent with the present application, and are used to explain a principle of the present application together with the specification.
FIG. 1 shows a schematic flowchart of a packet sending method provided by embodiments of the present application.
FIG. 2 shows a schematic diagram of a deterministic forwarding path and corresponding orchestration periods on ports of nodes contained in the path provided by embodiments of the present application.
FIG. 3 shows a schematic diagram of a mapping relationship of timeslots corresponding to sub-bursts on ports of a head node provided by embodiments of the present application.
FIG. 4 shows a schematic diagram of a mapping relationship between an actual arrival time and a start time of an ideal incoming timeslot when an intermediate node receives a service packet provided by embodiments of the present application.
FIG. 5 shows a schematic diagram of a deterministic forwarding path provided by embodiments of the present application.
FIG. 6 shows a schematic structural diagram of an electronic device provided by embodiments of the present application.

### DETAILED DESCRIPTION

Exemplary embodiments will be illustrated in detail here, and their examples are shown in accompanying drawings. When the following description refers to the accompanying drawings, unless otherwise indicated, the same numbers in different accompanying drawings indicate the same or similar elements. Implementations described in the following exemplary embodiments do not represent all implementations consistent with the present application. Rather, they are merely examples of apparatuses and methods consistent with some aspects of the present application as detailed in the appended claims.

The standard RFC8655, issued by the IETF, describes an architecture of a deterministic network and defines quality of service (QoS) objectives of deterministic forwarding: minimum and maximum delays from a source to a destination, as well as a bounded delay jitter; an allowable packet loss rate; and an upper bound for unsorted packet transmission.

To achieve these objectives, the deterministic network adopts means such as resource reservation, explicit routing, and service protection. In general, a deterministic path is a strictly explicit path obtained by computation relying on a centralized controller, and resources are reserved at nodes along the path to meet service level agreement (SLA) needs of deterministic services. Specifically, at an ingress node in the network, a corresponding outgoing timeslot resource may be reserved on an outgoing port for a service flow with a corresponding arrival time. At an intermediate node in the network, a corresponding outgoing timeslot resource may be reserved on the outgoing port for a service flow with a corresponding incoming timeslot. The method usually uses a round-robin queue to support timeslot-based packet scheduling. Generally, one timeslot corresponds to one queue. Such packet scheduling method can provide a guaranteed delay and delay jitter for a service flow, but only supports sending a service packet within a specified timeslot, the service packet cannot be sent in advance, and it is difficult to meet service needs of a service flow that requires a lower lower bound of delay.

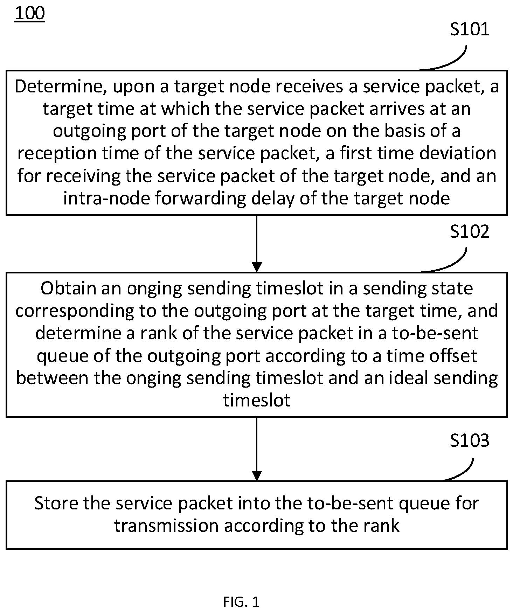

Aiming at the technical problems existing in a packet forwarding process in the above related art, embodiments of the present application provide a packet sending method. In order to meet richer service needs, in particular the service flow requiring the lower lower bound of delay, embodiments of the present application provide a sorted-queue based timeslot scheduling mechanism, so as to provide a lower lower bound of delay while providing a guaranteed upper bound of delay. The sorted-queue here is different from a conventional first-in first-out (FIFO) queue, and can support sorting packets inserted into the queue by certain sorting rules (e.g., priority and time), i.e., a packet inserted into the queue is not always inserted at the tail of a queue as in a case of FIFO, but may be inserted in an appropriate position according to the sorting rules; and the packet is always obtained from the head of a queue head for transmission. In some cases, FIG. 1 shows a schematic flowchart of a packet sending method provided by embodiments of the present application. As shown in the figure, the method 100 for sending the packet may include the following steps.

At S101: upon a target node receives a service packet, a target time at which the service packet arrives at an outgoing port of the target node is determined on the basis of a reception time of the service packet, a first time deviation for receiving the service packet of the target node, and an intra-node forwarding delay of the target node.

At S102: an ongoing sending timeslot in a sending state corresponding to the outgoing port at the target time is obtained, and the rank of the service packet in a to-be-sent queue of the outgoing port is determined on the basis a time offset between the ongoing sending timeslot and an ideal outgoing timeslot. The ideal outgoing timeslot is an outgoing timeslot reserved for the service packet within an orchestration period of the outgoing port of the target node.

At S103: the service packet is stored into the to-be-sent queue for transmission according to the rank.

By the above steps, after the target node receives the service packet, the rank of the service packet is determined, and then the service packet is stored in the to-be-sent queue for transmission according to the rank. In this way, each service packet is stored in a corresponding position in the to-be-sent queue according to the rank, so that the service packets in the to-be-sent queue are sent in a sorted manner. Moreover, the rank of the service packet is determined according to the time offset between the ongoing sending timeslot corresponding to the target time at which the service packet arrives at the outgoing port and the reserved ideal outgoing timeslot. In this way, a lower lower bound of delay can be provided while a guaranteed upper bound of delay is provided, so that richer service needs may be met, especially for a service flow that requires a lower lower bound of delay, and the quality of service of a service is further improved.

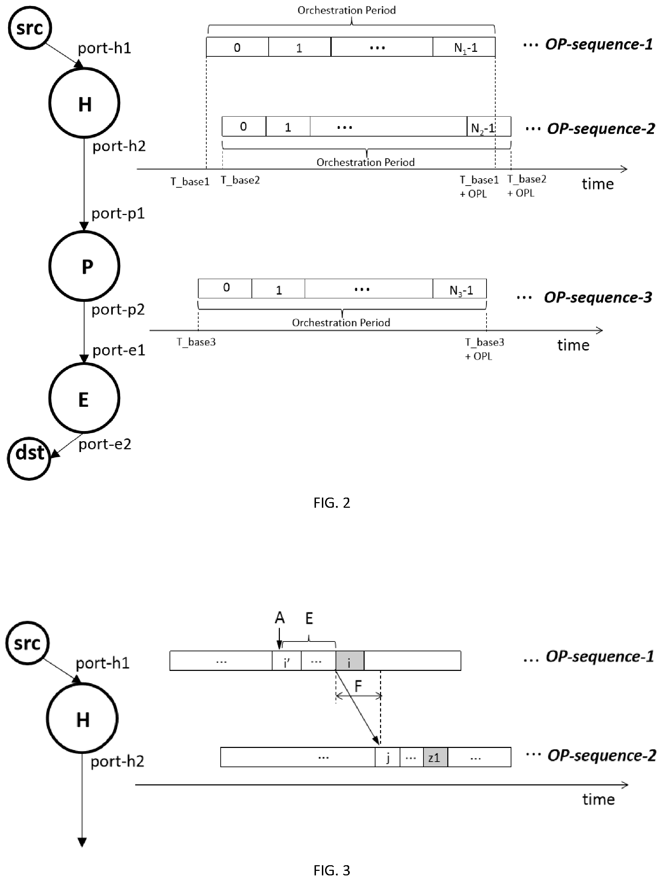

Illustration is made in conjunction with specific examples. As shown in FIG. 2, a deterministic forwarding path includes a head node H, an intermediate node P (a plurality of intermediate nodes may be contained and are not shown in the figure), and a tail node E, for transmitting a service flow which is sent from a source client side src to a destination client side dst.

On each port of each node contained in the deterministic forwarding path, an instance of an orchestration period with the same specific length is enabled to allocate timeslot resources for a service within a range of the orchestration period. For example, an instance of an orchestration period with a length of OPL is enabled on a port port-h1 of the head node H, and N1 timeslots are contained in the orchestration period. An instance of an orchestration period with the same length of OPL is enabled on a port port-h2 of the head node H, and N2 timeslots are contained in the orchestration period. An instance of an orchestration period with the same length of OPL is enabled on a port port-p2 of the intermediate node P, and N3 timeslots are contained in the orchestration period.

Here, a reason why each port has different numbers of timeslots is that there is difference between configured timeslot lengths, e.g., the timeslot length for port-h1 is TL1, the timeslot length for port-h2 is TL2, and the timeslot length for port-p2 is TL3. Timeslots in each orchestration period are numbered from 0.

Taking an example of the instance of the orchestration period with the length of the orchestration period length (OPL) enabled on the port port-h1 of the head node, it takes a time T_base1 as start of a first round of orchestration period, and then begins a second round of orchestration period at T_base1+OPL, and so on. A formed orchestration period sequence is abbreviated as OP-sequence-1.

Similarly, when the instance of the orchestration period with the length of OPL is enabled on the port port-h2 of the head node, it takes a time T_base2 as start of a first round of orchestration period, and then begins a second round of orchestration period at T_base2+OPL, and so on. A formed orchestration period sequence is abbreviated as OP-sequence-2.

When the instance of the orchestration period with the length of OPL is enabled on the port port-p2 of the intermediate node P, it takes a time T_base3 as start of a first round of orchestration period, and then begins a second round of orchestration period at T_base3+OPL, and so on. A formed orchestration period sequence is abbreviated as OP-sequence-3.

It should be noted that time of different port within the node should be maintained synchronized, i.e., all ports of one node share the same local system time. For example, T_base1 and T_base2 above are generally different local time within the head node H. They may be configured to be the same local time. In this way, regardless of a node restart or a port restart, these start times (i.e., T_base1, or T_base2, or T_base3) of the orchestration periods can all continue to be in effect to avoid impact on a timeslot mapping relationship between the nodes. In actual applications, considering that with the passage of time, T_base is a historical time that is too far from the current system time, T_base is also updated periodically (e.g., according to T_base = T_base + k*OPL, where k is a natural number) to be closer to the current system time, but an updated value cannot exceed the current system time.

The packet forwarded along the deterministic path above will be forwarded in a specific outgoing timeslot of the outgoing port of each target node, wherein the target node includes a head node, an intermediate node, and a tail node. For example, the packet is first sent in a timeslot z1 of the outgoing port port-h2 of the head node H, and then sent in a timeslot z2 of the outgoing port port-p2 of the intermediate node P, and so on, up to the tail node.

After receiving the service packet, the target node determines the rank of the service packet and inserts the service packet into an appropriate position in the to-be-sent queue according to the rank. Here, the appropriate position may be understood as a position corresponding to the rank in the to-be-sent queue. A process for determining the rank may be performed on a single board on which an incoming port of the target node is located. Then the rank is forwarded as auxiliary information along with the service packet to a single board on which the outgoing port is located via internal switching, to be used for queuing in the sorted-queue of the outgoing port.

The target node determines the target time at which the service packet arrives at the outgoing port of the target node on the basis of the reception time A of the service packet, the first time deviation E for receiving the service packet of the target node, and an intra-node forwarding delay F of the target node. In a possible implementation, the target time t = A + E + F, where the head node H may calculate the first time deviation E according to the time offset between the "ideal incoming timeslot" and the "actual incoming timeslot" for the packet, and the intermediate node P may obtain E (carried by an upstream node during transmission) directly from the service packet. Note: E is updated during sending at each hop. Then, the ongoing sending timeslot in a sending state corresponding to the outgoing port at the target time is obtained, and the rank of the service packet in the to-be-sent queue of the outgoing port is determined according to a time offset between the ongoing sending timeslot and an ideal outgoing timeslot.

In a possible implementation, in above step S102, determining the rank of the service packet in the to-be-sent queue of the outgoing port according to the time offset between the ongoing sending timeslot and the ideal outgoing timeslot includes that: start time of the ongoing sending timeslot is determined on the basis of orchestration period information of the outgoing port of the target node; start time of the ideal outgoing timeslot is determined on the basis of the start time of the ongoing sending timeslot, and the time offset between the ongoing sending timeslot and the ideal outgoing timeslot; and the rank of the service packet in the to-be-sent queue of the outgoing port is determined on the basis of the start time of the ideal outgoing timeslot.

It can be seen that the rank may be the start time of the ideal outgoing timeslot, and may also be an intermediate time or an end time of the ideal outgoing timeslot. For ease of calculation, in the embodiment of the present application, the start time of the ideal outgoing timeslot is determined as the rank, and the service packet is stored into the to-be-sent queue for transmission according to the rank, which can provide a lower lower bound of delay while providing a guaranteed upper bound of delay.

Since the same ideal outgoing timeslot is contained in each round of orchestration period, a correct round number of orchestration period needs to be determined. The above orchestration period information may include start time of a first round of orchestration period, the length of an orchestration period, the length of an outgoing timeslot, and the number of timeslots contained in an orchestration period. The start time of the ongoing sending timeslot may be specifically determined in the following way: $t _ j _ begin = T _ base + n * OPL + j * TL ;$ where $n = \left⌊\frac{t - T _ base}{OPL}\right⌋ ;$ $j = \left⌊\frac{t - T _ base}{TL}\right⌋ %N ;$
where t_j_begin denotes the start time of the ongoing sending timeslot j, *T_base* denotes the start time of the first round of orchestration period, n denotes the round number of the orchestration period (note: the round number of the first round is 0), *OPL* denotes the length of the orchestration period, *TL* denotes the length of the outgoing timeslot, └ ┘ denotes rounding down, t denotes the target time, % denotes a remainder operation, and N denotes the number of timeslots contained in the orchestration period.

It should be noted that *t - T_base* denotes how much time passes from *T_base* to *t,* with the implicit meaning that *T_base* is earlier than *t.* In a specific application, a value of *t* is limited by the number of bits in a register, a maximum value is present, then t may flip, resulting in a possible case where *t < T_base,* and at this time, *t - T_base* may be modified to (*t - T_base + T_max*) *% T_max,* where *T_max* denotes a maximum value that triggers a flip to 0.

Then, the start time of the ideal outgoing timeslot may be determined in the following way: $t _ z _ begin = t _ j _ begin + t _ diff ;$ where $t _ diff = \left[\left(z-j+N\right)%N\right] * TL ;$
where t_z_begin denotes the start time of the ideal outgoing timeslot z, and t_diff denotes the time offset between the ongoing sending timeslot j and the ideal outgoing timeslot z.

In the above calculation process, t_z_begin is not calculated directly as in calculating t_j_begin, due to the fact that a case of z < j may be present on a numerical value of the timeslot number (e.g., j is at the tail of a current orchestration period, and z is at the head of a next round of orchestration period). The above calculation method always ensures that z after j is selected.

In a possible implementation, the target node includes a head node; and the reception time of the service packet may be obtained in the following way: in a case where the service packet arrives at a user network interface (UNI) corresponding to the head node, a regulator of the UNI performs traffic regulation on the service packet according to a preset traffic regulation rule; and a first time at which the service packet leaves the regulator after the traffic regulation is obtained, and the first time is determined as the reception time of the service packet, wherein the traffic regulation rule may be pre-configured as needed.

In specific implementation, the head node H maintains forwarding information related to the service flow. As shown in FIG. 3, based on one or more sub-bursts of the service flow that are uniformly distributed within the orchestration period of the UNI port after traffic regulation, for each sub-burst, its ideal incoming timeslot i, as well as an ideal outgoing timeslot z reserved on the outgoing port are maintained. In fact, if m sub-bursts of one service flow are distributed within the orchestration period, forwarding information maintained by the head node H for the service flow shall contain m records as follows.
<ideal incoming timeslot i_1, ideal outgoing timeslot z_1>
<ideal incoming timeslot i_2, ideal outgoing timeslot z_2>
   ......
<ideal incoming timeslot i_m, ideal outgoing timeslot z_m>

Then, the preset reception time corresponding to the service packet may be determined in the following way: a target state record which is maintained by the head node for a service flow to which the service packet belongs, and an actual incoming timeslot of the service packet are obtained; wherein the actual incoming timeslot is a corresponding timeslot within an orchestration period of the user network interface at the reception time; and the preset reception time corresponding to the service packet is determined on the basis of the start time of an ideal incoming timeslot in the target state record; wherein the ideal incoming timeslot is not earlier than the actual incoming timeslot, and the ideal incoming timeslot is an incoming timeslot having a smallest offset from the actual incoming timeslot among a plurality of incoming timeslots in the target state record.

A target state record includes a plurality of incoming timeslots and outgoing timeslots corresponding to the plurality of incoming timeslots; and the ideal outgoing timeslot reserved for the service packet may be specifically acquired in the following way: an outgoing timeslot corresponding to the ideal incoming timeslot in the target state record is determined as the ideal outgoing timeslot.

In some cases, since the service packet received from the source client side src does not always arrive ideally, a time A after traffic regulation of the service packet may possibly not be in a certain ideal incoming timeslot. At this time, the head node H may determine, according to the actual arrival time A, a closest ideal incoming timeslot i after A. This may specifically include the following steps.

At Step 1011: an actual incoming timeslot *i'* is obtained, $i ′ = \left⌊\frac{A - T _ base 1}{TL 1}\right⌋ %N 1$, where T_base1 denotes start time of a first round of orchestration period of the UNI port port-h1, TL1 denotes the length of timeslot in the orchestration period of the UNI port port-h1, and N1 denotes the number of timeslots contained in the orchestration period of the UNI port port-h1.

At Step 1012: a closest ideal incoming timeslot i after the timeslot *i'* is determined, such that (*i* - *i'* + *N*1)%*N*1 is the minimum, and *i* ∈ {*i* _1, *i* _ 2,... , *i _ m*}.

Then, the head node H, after determining the reception time of the service packet, determines the first time deviation E, which may specifically include the following steps.

At Step 1013: the round number n of the orchestration period of the UNI port port-h1 at the time A is obtained (note: the round number of the first round is 0), i.e., $n = \left⌊\frac{A - T _ base 1}{OPL}\right⌋$.

At Step 1014: start time of the timeslot i' is obtained by t_i'_begin = T_base1 + n*OPL + i'*TL1.

At Step 1015: a time offset between the ideal incoming timeslot i and the actual incoming timeslot i' is obtained by t_diff = [(i - i' + N1)%N1] * TL1.

At Step 1016: start time of the ideal incoming timeslot i is obtained by t_i_begin = t_i'_begin + t_diff.

At Step 1017: a deviation is calculated and obtained by E = t_i_begin - A.

Then, the head node H calculates the rank of the service packet by the following steps.

At Step 102a1: t = A + E +F is recorded to denote a target time at which the packet arrives at the outgoing port port-h2.

At Step 102a2: the round number *n* of the orchestration period of the outgoing port at the time t is obtained (note: the round number of the first round is 0), i.e., $n = \left⌊\frac{t - T _ base 2}{OPL}\right⌋$, where *T_base2* denotes the start time of the first round of orchestration period of the outgoing port port-h2.

At Step 102a3: a timeslot j in a sending state of the outgoing port at the time t is obtained, $j = \left⌊\frac{t - T _ base 2}{TL 2}\right⌋ %N 2$, where *TL2* denotes the length of timeslot of the orchestration period of the outgoing port port-h2, and N2 denotes the number of timeslots contained in the orchestration period of the outgoing port port-h2.

At Step 102a4: the start time of the timeslot j is obtained by t_j_begin = *T_base2 + n*OPL* + *j*TL2.*

At Step 102a5: a time offset between the ideal outgoing timeslot z1 and the timeslot j is obtained by t_diff = [(z1 - *j + N2*)*%N2*] ** TL2.*

At Step 102a6: then the start time of the ideal outgoing timeslot z1 is t_z1_begin = t_j_begin + t_diff, which is the rank of the service packet.

In another possible implementation, the target node includes an intermediate node. The reception time of the service packet may be specifically acquired in the following way: a second time at which the service packet arrives at the intermediate node is obtained, and the second time is determined as the reception time of the service packet.

Then, in above step S101, determining the target time at which the service packet arrives at the outgoing port according to the reception time, the first time deviation of the target node receiving the service packet, and the intra-node forwarding delay of the target node includes that: a first time deviation corresponding to the service packet is obtained; and a sum of the reception time, the first time deviation, and the intra-node forwarding delay is determined as the target time at which the service packet arrives at the outgoing port.

In specific implementation, the intermediate node P may acquire the time deviation E directly from the packet sent by an upstream node. As described later, although the packet is sorted in the sorted-queue at the upstream node according to the rank, there may be a deviation of the actual sending time time_tx for the packet from the rank, and the actual sending time may be earlier than the rank (at which time E is positive) or later than the rank (at which time E is negative), i.e., E = rank - time_tx is carried in the sent packet.

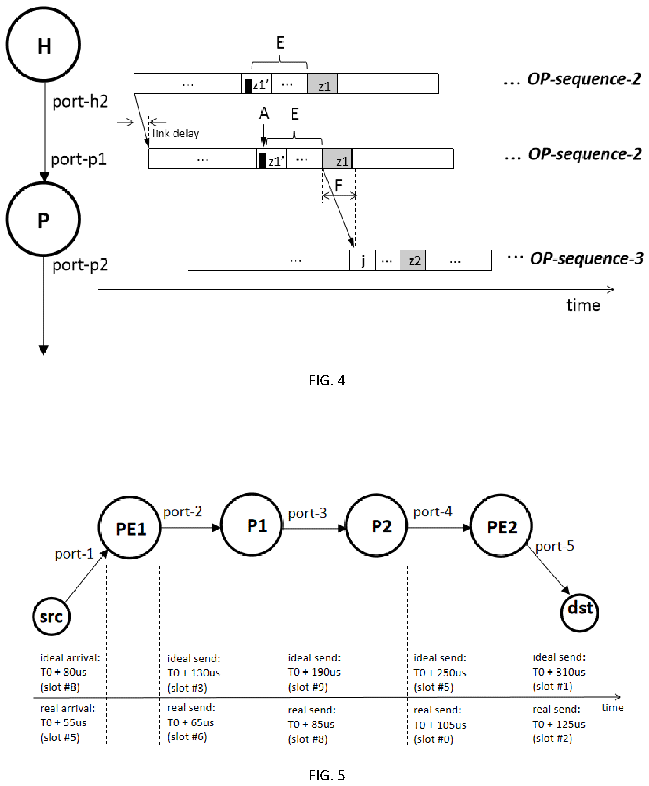

As shown in FIG. 4, the service packet should have been sent at the start time of the ideal outgoing timeslot z1 of the upstream node (e.g., the head node H), but it is actually sent earlier in z1' (note: analysis of delayed sending is similar), resulting in the packet arriving at the intermediate node P at the time A.

Then, calculating the rank for the service packet by the intermediate node P may include the following steps.

At Step 102b1: t = A + E +F is recorded to denote the target time at which the packet arrives at the outgoing port port-p2.

At Step 102b2: the round number *n* of the orchestration period of the outgoing port at the time t is obtained (note: the round number of the first round is 0), i.e., $n = \left⌊\frac{t - T _ base 3}{OPL}\right⌋$, where *T_base3* denotes start time of the first round of orchestration period of the outgoing port port-p2.

At Step 102b3: a timeslot *j* in a sending state of the outgoing port at the time *t* is obtained, $j = \left⌊\frac{t - T _ base 3}{TL 3}\right⌋ %N 3$, where *TL3* denotes the length of timeslots of the orchestration period of the outgoing port port-p2, and *N3* denotes the number of timeslots contained in the orchestration period of the outgoing port port-p2.

At Step 102b4: a start time of the timeslot j is obtained by t_j_begin = *T_base3 + n*OPL* + *j*TL3.*

At Step 102b5: a time offset between the ideal outgoing timeslot z2 and the timeslot j is obtained by t_diff = [(z2 *- j + N3*)%*N3*] ** TL3.*

At Step 102b6: then the start time of the ideal outgoing timeslot z2 is t_z2_begin = t_j_begin + t_diff, which is the rank of the service packet.

In a possible implementation, a plurality of to-be-sent queues may be provided, and each to-be-sent queue has a different scheduling rule. In above step S103, storing the service packet into the to-be-sent queue for transmission according to the rank includes that: a scheduling mode of the service packet is determined on the basis of a scheduling mode identifier corresponding to the service packet; and the service packet is stored into a target to-be-sent queue for transmission according to the rank, wherein the target to-be-sent queue is a to-be-sent queue of which a scheduling rule matches the scheduling mode among the plurality of to-be-sent queues.

The scheduling mode identifier is used to indicate the scheduling rule of the to-be-sent queue configured by a user. Adopting to-be-sent queues with different scheduling rules to send service packets may meet richer service needs.

In a possible implementation, the to-be-sent queues include an in-time sending queue and an on-time sending queue, i.e., each to-be-sent queue may be configured in one of two scheduling modes: an in-time scheduling mode and an on-time scheduling mode. It should be noted that one to-be-sent queue cannot be configured in in-time and on-time scheduling modes simultaneously, and only one of them can be chosen. The above storing the service packet into the target to-be-sent queue for transmission according to the rank includes that: in a case where the target to-be-sent queue is an in-time sending queue, the service packet is stored into the in-time sending queue on the outgoing port according to the rank, so that the in-time sending queue sends the service packet according to a first scheduling rule; or, in a case where the target to-be-sent queue is an on-time sending queue, the service packet is stored into the on-time sending queue on the outgoing port according to the rank, so that the on-time sending queue sends the service packet according to a second scheduling rule; wherein the first scheduling rule is: if the queue is not empty, a packet is always obtained from the head of a queue for transmission; and the second scheduling rule is: if the queue is not empty and a current rank of a head packet of the queue is equal to or earlier than a current system time, the head packet of the queue is sent, otherwise, the head packet of the queue is not sent.

According to the first scheduling rule and the second scheduling rule above, it may be determined that in the in-time scheduling mode, the actual sending time time_tx of the service packet may be earlier or later than the rank thereof; whereas in the on-time scheduling mode, the actual sending time time_tx of the service packet cannot be earlier than the rank thereof.

In a possible implementation, the above storing the service packet into the to-be-sent queue for sending according to the rank includes that: the service packet is encapsulated into a data packet, and the data packet is stored into the target to-be-sent queue according to the rank; wherein the data packet includes the service packet, the scheduling mode identifier, and the first time deviation; and when the service packet in the target to-be-sent queue is sent, the first time deviation of the service packet is updated.

In some cases, the scheduling mode identifier and the first time deviation may be carried in the service packet, wherein the two pieces of information may be carried in any L2 or L3 packet header, such as Ethernet Header, IPv4 Header, IPv6 Header, and MPLS Header. In addition, the first time deviation of the service packet is updated when the target to-be-sent queue sends the service packet.

The first time deviation of the service packet may be updated in the following way: an actual sending time of the service packet is determined; and a difference between the rank and the actual sending time is used as an updated value of the first time deviation of the service packet, and the first time deviation of the service packet is updated according to the updated value.

In some cases, taking an example that the to-be-sent queue is configured in the in-time scheduling mode or the on-time scheduling mode. In the in-time scheduling mode, the first time deviation E will be updated to E = rank - time_tx, whose value may be positive, negative, or 0, and is carried in the sent service packet. In the on-time scheduling mode, E will also be updated to E = rank - time_tx, whose value may be negative or 0, and is carried in the sent service packet.

Illustration is made in conjunction with specific examples. As shown in FIG. 5, a deterministic forwarding path includes a head node PE1, intermediate nodes P1 and P2, and a tail node PE2, and is used to transmit a service flow sent from a source client side src to a destination client side dst.

On each port of each node contained in the deterministic forwarding path, an instance of an orchestration period with the same specific length of 100 us is enabled. For simplicity of description, it is assumed that orchestration periods of all ports have a timeslot length of 10 us and all contain 10 timeslots (timeslot numbers from #0 to #9). It is also assumed that time of all nodes is actually synchronized, and time T0 is the start time of the first round of orchestration period of each of all the ports.

It may be seen that for any integer k ≥ 0:
a time in a range [T0+100*k, T0+100*k+10) us belongs to the timeslot #0;
a time in a range [T0+100*k+10, T0+100*k+20) us belongs to the timeslot #1;
a time in a range [T0+100*k+20, T0+100*k+30) us belongs to the timeslot #2;
   ......
a time in a range [T0+100*k+90, T0+100*k+100) us belongs to the timeslot #9; and
it is assumed that the maximum forwarding delay in all nodes is 10 us, and all link propagation delays are 10 us.

It is assumed that an outgoing port of the tail node PE2 facing the destination customer side dst also adopts a timeslot-based scheduling mechanism.

At the head node PE1, the service packet received from the source client side src is expected to arrive within the timeslot #8 of each round of orchestration period on an incoming port port-1, i.e., an ideal incoming timeslot is #8, and a case where an ideal arrival time or an actual arrival time is in the first round of orchestration period is shown in the figure.

The service packet is then expected to be sent within the timeslot #3 of the second round of orchestration period on the outgoing port port-2, i.e., the ideal outgoing timeslot is #3.

Similarly, at the intermediate node P1, the service packet is expected to be sent within the timeslot #9 of the second round of orchestration period on the outgoing port port-3, i.e., the ideal outgoing timeslot (ideal send) is #9.

Similarly, at the intermediate node P2, the service packet is expected to be sent within the timeslot #5 of the third round of orchestration period on the outgoing port port-4, i.e., the ideal outgoing timeslot (ideal send) is #5.

However, an actual case may be that, at the head node PE1, the service packet received from the source client side src arrives at a time T0+55 us. At this time, the time deviation E is calculated to be 25 us, then in combination with the intra-node forwarding delay of 10 us, the service packet should arrive at the outgoing port at the target time T0+90 us, and then the start time (i.e., T0+130 us) of the ideal outgoing timeslot #3 after T0+90 us should be taken as the rank of the service packet and inserted into the to-be-sent queue. If the service packet is sent by PE1 at T0+130 us, the time deviation E is updated to 0. A case of sending at T0+65 us in advance is illustrated in the figure, at which time the time deviation E is updated to 65 us and is carried in the sent service packet.

Next, at the intermediate node P1, after a link delay of 10 us, the service packet will arrive at the incoming port at T0+75 us, in combination with the time deviation E and the intra-node forwarding delay of 10 us, the service packet should arrive at the outgoing port at the target time T0+150 us, and then the start time (i.e., T0+190 us) of the ideal outgoing timeslot #9 after T0+150 us should be taken as the rank of the service packet and inserted into the to-be-sent queue. A case of sending at T0+85 us in advance is illustrated in the figure, at which time the time deviation E is updated to 105 us and is carried in the sent service packet.

Next, at the intermediate node P2, after a link delay of 10 us, the service packet will arrive at the incoming port at T0+95 us, in combination with the time deviation E and the intra-node forwarding delay of 10 us, the service packet should arrive at the outgoing port at the target time T0+210 us, and then the start time (i.e., T0+250 us) of the ideal outgoing timeslot #5 after T0+210 us should be taken as the rank of the service packet and inserted into the to-be-sent queue. A case of sending at T0+105 us in advance is illustrated in the figure, at which time the time deviation E is updated to 145 us and is carried in the sent service packet.

Next, at the tail node PE2, after a link delay of 10 us, the service packet will arrive at the incoming port at T0+115 us, in combination with the time deviation E and the intra-node forwarding delay of 10 us, the service packet should arrive at the outgoing port at the target time T0+270 us, and then the start time (i.e., T0+310 us) of the ideal outgoing timeslot #1 after T0+270 us should be taken as the rank of the service packet and inserted into the to-be-sent queue. A case of sending at T0+125 us in advance is illustrated in the figure, however, since the deterministic forwarding path is usually decapsulated when the service packet is sent to the destination client side, it is not necessary to carry the time deviation E.

In the method for sending the packet provided by the embodiments of the present application, after the target node receives the service packet, the target time at which the service packet arrives at the outgoing port of the target node is determined on the basis of the reception time of the service packet, the first time deviation of the target node receiving the service packet, and the intra-node forwarding delay of the target node. The ongoing sending timeslot in the sending state corresponding to the outgoing port at the target time is obtained, and the rank of the service packet in the to-be-sent queue of the outgoing port is determined on the basis of the time offset between the ongoing sending timeslot and the ideal outgoing timeslot; and the service packet is stored into the to-be-sent queue for sending according to the magnitude of the rank. In this way, a lower lower bound of delay can be provided while a guaranteed upper bound of delay is provided, so that richer service needs may be met, and a quality of service of a service is improved.

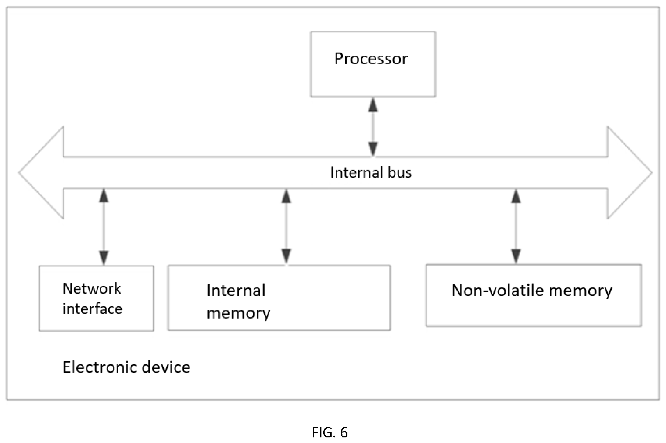

FIG. 6 shows a schematic diagram of a hardware structure of an electronic device provided by embodiments of the present application. Referring to the figure, at a hardware level, the electronic device includes a processor, and optionally includes an internal bus, a network interface, and a memory. The memory may contain an internal memory, such as a high-speed random-access memory (RAM), and may further include a non-volatile memory (NVM), such as at least one disk memory. Certainly, the electronic device may further include hardware required for other services.

The processor, the network interface and the memory may be connected to each other via an internal bus. The internal bus may be an industry standard architecture (ISA) bus, a peripheral component interconnect (PCI) bus, or an extended industry standard architecture (EISA) bus, etc. The bus may be categorized into an address bus, a data bus, a control bus, etc. For ease of representation, the bus is represented by only one bi-directional arrow in this figure, but it does not indicate that there is only one bus or one type of bus.

The memory stores a program. Specifically, the program may include a program code. The program code includes a computer operating instruction. The memory may include an internal memory and a non-volatile memory and provides an instruction and data to the processor.

The processor reads a corresponding computer program from the non-volatile memory into the internal memory and then runs the same, forming an apparatus for locating a target user at a logical level. The processor executes the program stored in the memory and specifically performs: the method disclosed by the embodiment shown in FIG. 1 and realizes functions and beneficial effects of the various methods described in the preceding method embodiments, which will not be repeated here.

The method disclosed by the embodiment shown in FIG. 1 of the present application may be applied to the processor or implemented by the processor. The processor may be an integrated circuit chip that has a capability to process signals. During an implementation process, all steps of the above method may be completed by an integrated logic circuit of hardware or instructions in the form of software in the processor. The above processor may be a general-purpose processor, including a central processing unit (CPU), a network processor (NP), etc., and may further be a digital signal processor (DSP), an application specific integrated circuit (ASIC), a field-programmable gate array (FPGA) or other programmable logic devices, a discrete gate or a transistor logic device, or a discrete hardware component. Various methods, steps, and logical block diagrams disclosed in the embodiments of the present application may be realized or performed. The general-purpose processor may be a microprocessor, or the processor may also be any conventional processor, etc. The steps of the method disclosed in conjunction with the embodiments of the present application may be directly embodied to be performed and completed by a hardware decoding processor, or may be performed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory, and completes the steps of the above method in combination with its hardware.

The computer device may also perform the various methods described in the preceding method embodiments and realize functions and beneficial effects of the various methods described in the preceding method embodiments, which will not be repeated here.

Of course, in addition to the implementation of software, the electronic device of the present application does not exclude other implementations, such as a logic device or a combination of software and hardware, etc., which means that a performing subject of the following processing flow is not limited to the individual logic units, but may also be hardware or a logic device.

Embodiments of the present application further propose a computer-readable storage medium, storing one or more programs. The one or more programs, when executed by an electronic device including a plurality of application programs, cause the electronic device to perform the method disclosed in the embodiment shown in FIG. 1 and to realize functions and beneficial effects of the various methods described in the preceding method embodiments, which will not be repeated here.

The computer-readable storage medium includes a read-only memory (ROM for short), a random access memory (RAM for short), a magnetic disk or an optical disk, etc.

Further, embodiments of the present application further provide a computer program product, including a computer program stored on a non-transient computer-readable storage medium. The computer program includes program instructions. The program instructions, when executed by a computer, implement the following flow: the method disclosed in the embodiment shown in FIG. 1 and realize functions and beneficial effects of the various methods described in the preceding method embodiments, which will not be repeated here.

The embodiment of the present application may be applied to a variety of electronic device collaboration or interconnection scenarios, including: collaboration and interconnection of a mobile phone and a laptop/tablet computer; collaboration and interconnection of a mobile terminal and a smart television/display; collaboration and interconnection of a mobile phone or a tablet computer, and an on-board entertainment system; collaboration and interconnection of a mobile terminal and an intelligent conferencing system, and so on, so as to meet the needs of users in diverse scenarios, such as a smart home, a smart office, and a smart travel.

In conclusion, the foregoing is only preferred embodiments of the present application and does not limit the scope of protection of the present application. Any modifications, equivalent substitutions, improvements, etc. made within the spirit and principle of the present application shall be included in the scope of protection of the present application.

The system, apparatus, module, or unit clarified in the above embodiments may specifically be implemented by a computer chip or entity, or by a product having a certain function. A typical implementation device is a computer. Specifically, the computer may be, for example, a personal computer, a laptop computer, a cellular telephone, a camera phone, a smart phone, a personal digital assistant, a media player, a navigation device, an e-mail device, a gaming console, a tablet computer, a wearable device, or a combination of any of these devices.

Computer-readable media include permanent and non-permanent, removable and non-removable media, and may be used by any method or technology to implement information storage. Information may be computer-readable instructions, data structures, modules of a program, or other data. Examples of storage media for a computer include, but are not limited to, a phase-change random access memory (PRAM), a static random access memory (SRAM), a dynamic random access memory (DRAM), other types of random access memories (RAMs), a read only memory (ROM), an electrically erasable programmable read only memory (EEPROM), a flash memory or other memory technologies, a compact disc read only memory (CD-ROM), a digital versatile disc (DVD) or other optical storage, a magnetic cartridge tape, magnetic tape disk storage or other magnetic storage devices, or any other non-transfer media that may store information which may be accessed by a computing device. As defined herein, a computer-readable medium does not include transitory media, such as modulated data signals and carriers.

It also needs to be noted that terms "include," "contain," or any other variant thereof, are intended to cover non-exclusive inclusion, such that a process, method, commodity or device that includes a series of elements includes not only those elements but also other elements that are not explicitly listed, or further includes elements that are inherent to such a process, method, commodity or device. Without further limitation, an element defined by a phrase "including a ..." does not exclude the existence of other identical elements in the process, method, commodity or device including the element.

The various embodiments in this specification are described in a progressive manner, and the same or similar parts between the various embodiments can be referred to each other. Each embodiment focuses on contents different from other embodiments. In particular, for the system embodiment, as it is basically similar to the method embodiment, the description is relatively simple. As for related parts, please refer to partial description in the method embodiment.

## Claims

1. A packet sending method, comprising:
determining, upon a target node receives a service packet, a target time at which the service packet arrives at an outgoing port of the target node on the basis of a reception time of the service packet, a first time deviation for receiving the service packet of the target node, and an intra-node forwarding delay of the target node;
obtaining an ongoing sending timeslot in a sending state corresponding to the outgoing port at the target time, and determining a rank of the service packet in a to-be-sent queue of the outgoing port on the basis of a time offset between the ongoing sending timeslot and an ideal outgoing timeslot; wherein the ideal outgoing timeslot is an outgoing timeslot reserved for the service packet within an orchestration period of the outgoing port of the target node; and
storing the service packet into the to-be-sent queue for transmission according to the rank.

2. The method according to claim 1, wherein the target node comprises a head node; and the reception time of the service packet is obtained in the following way:
performing, in a case where the service packet arrives at a user network interface corresponding to the head node, traffic regulation on the service packet according to a preset traffic regulation rule by a regulator of the user network interface; and
obtaining a first time at which the service packet leaves the regulator after traffic regulation, and determining the first time as the reception time of the service packet.

3. The method according to claim 2, wherein determining the target time at which the service packet arrives at the outgoing port on the basis of the reception time, the first time deviation for receiving the service packet of the target node, and the intra-node forwarding delay of the target node comprises:
determining the first time deviation of the service packet on the basis of the reception time and a preset reception time corresponding to the service packet; and
determining a sum of the reception time, the first time deviation, and the intra-node forwarding delay as the target time at which the service packet arrives at the outgoing port.

4. The method according to claim 3, wherein the preset reception time corresponding to the service packet is determined in the following way:
obtaining a target state record which is maintained by the head node for a service flow to which the service packet belongs, and an actual incoming timeslot of the service packet; wherein the actual incoming timeslot is a corresponding timeslot within an orchestration period of the user network interface at the reception time; and
determining the preset reception time corresponding to the service packet on the basis of a start time of an ideal incoming timeslot in the target state record; wherein the ideal incoming timeslot is not earlier than the actual incoming timeslot, and the ideal incoming timeslot is an incoming timeslot having a smallest offset from the actual incoming timeslot among a plurality of incoming timeslots in the target state record.

5. The method according to claim 4, wherein a target state record comprises a plurality of incoming timeslots and outgoing timeslots corresponding to the plurality of incoming timeslots; and the ideal outgoing timeslot reserved for the service packet is obtained in the following way:
determining an outgoing timeslot corresponding to the ideal incoming timeslot in the target state record as the ideal outgoing timeslot.

6. The method according to claim 1, wherein the target node comprises an intermediate node; and the reception time of the service packet is obtained in the following way:
obtaining a second time at which the service packet arrives at the intermediate node, and determining the second time as the reception time of the service packet.

7. The method according to claim 6, wherein determining the target time at which the service packet arrives at the outgoing port on the basis of the reception time, the first time deviation for receiving the service packet of the target node, and the intra-node forwarding delay of the target node comprises:
obtaining a first time deviation corresponding to the service packet; and
determining a sum of the reception time, the first time deviation, and the intra-node forwarding delay as the target time at which the service packet arrives at the outgoing port.

8. The method according to claim 1, wherein determining the rank of the service packet in the to-be-sent queue of the outgoing port on the basis of the time offset between the ongoing sending timeslot and the ideal outgoing timeslot comprises:
determining a start time of the ongoing sending timeslot on the basis of orchestration period information of the outgoing port of the target node;
determining a start time of the ideal outgoing timeslot on the basis of the start time of the ongoing sending timeslot, and the time offset between the ongoing sending timeslot and the ideal outgoing timeslot; and
determining the rank of the service packet in the to-be-sent queue of the outgoing port on the basis of the start time of the ideal outgoing timeslot.

9. The method according to claim 8, wherein the orchestration period information comprises a start time of a first round of orchestration period, a length of an orchestration period, a length of an outgoing timeslot, and a number of timeslots contained in an orchestration period; and the start time of the ongoing sending timeslot is determined in the following way: $t _ j _ begin = T _ base + n * OPL + j * TL ;$ wherein $n = \left⌊\frac{t - T _ base}{OPL}\right⌋ ;$ $j = \left⌊\frac{t - T _ base}{TL}\right⌋ %N ;$ wherein t_j_ begin denotes the start time of an ongoing sending timeslot j, *T_base* denotes the start time of the first round of orchestration period, n denotes a round number of the orchestration period, *OPL* denotes the length of the orchestration period, *TL* denotes the length of the outgoing timeslot, └ ┘ denotes rounding down, t denotes the target time, % denotes a remainder operation, and N denotes the number of timeslots contained in the orchestration period.

10. The method according to claim 9, wherein the start time of the ideal outgoing timeslot is determined in the following way: $t _ z _ begin = t _ j _ begin + t _ diff ;$ $wherein t _ diff = \left[\left(z-j+N\right)%N\right] * TL ;$ wherein t_z_begin denotes the start time of an ideal outgoing timeslot z, and t_diff denotes the time offset between the ongoing sending timeslot j and the ideal outgoing timeslot z.

11. The method according to claim 1, wherein a plurality of to-be-sent queues are provided, and each to-be-sent queue has a different scheduling rule; and storing the service packet into the to-be-sent queue for transmission according to the rank comprises:
determining a scheduling mode of the service packet on the basis of a scheduling mode identifier corresponding to the service packet; and
storing the service packet into a target to-be-sent queue for transmission according to the rank, wherein the target to-be-sent queue is a to-be-sent queue of which a scheduling rule matches the scheduling mode among the plurality of to-be-sent queues.

12. The method according to claim 11, wherein the to-be-sent queues comprise an in-time sending queue and an on-time sending queue; and storing the service packet into the target to-be-sent queue for transmission according to the rank comprises:
storing, in a case where the target to-be-sent queue is an in-time sending queue, the service packet into the in-time sending queue on the outgoing port according to the rank, so that the in-time sending queue sends the service packet according to a first scheduling rule; or
storing, in a case where the target to-be-sent queue is an on-time sending queue, the service packet into the an on-time sending queue on the outgoing port according to the rank, so that the on-time sending queue sends the service packet according to a second scheduling rule;
wherein the first scheduling rule comprises always obtaining the packet from a head of a queue for transmission in a case where the queue is not empty; and the second scheduling rule comprises sending a head packet of a queue in a case where the queue is not empty and a rank of the head packet of the queue is equal to or earlier than current system time, and otherwise, not sending a head packet of a queue.

13. The method according to claim 11, wherein storing the service packet into the target to-be-sent queue for transmission according to the rank comprises:
encapsulating the service packet into a data packet, and storing the data packet into the target to-be-sent queue according to the rank; wherein the data packet comprises the service packet, the scheduling mode identifier, and the first time deviation; and
updating the first time deviation of the service packet upon the service packet in the target to-be-sent queue is sent.

14. The method according to claim 13, wherein updating the first time deviation of the service packet comprises:
determining an actual sending time of the service packet; and
using a difference between the rank and the actual sending time as an updated value of the first time deviation of the service packet, and updating the first time deviation of the service packet according to the updated value.

15. An electronic device, comprising a processor and a memory, wherein the memory stores a program or instructions runnable on the processor, and the program or instructions, when executed by the processor, implement the steps of the method according to any one of claims 1 to 14.

16. A readable storage medium, storing a program or instructions thereon, wherein the program or instructions, when executed by a processor, implement the steps of the method according to any one of claims 1 to 14.
